# EUROPÄISCHE PATENTANMELDUNG

(11) **EP 3 722 641 A1**
(43) Veröffentlichungstag der Anmeldung: **14.10.2020**
(21) Anmeldenummer: 20162272.7
(22) Anmeldetag: 11.03.2020
(51) Int. Cl.: F16H 57/08

(54) **PLANETENTRÄGERANORDNUNG EINES PLANETENGETRIEBES, INSBESONDERE EINES PLANETENGETRIEBES EINES SEITENTÜRANTRIEBES, SOWIE VERFAHREN ZUM HERSTELLEN EINER DERARTIGEN PLANETENTRÄGERANORDNUNG**

(30) Priorität: 11.04.2019 DE 102019109616
(71) Anmelder: IMS Gear SE & Co. KGaA, 78166 Donaueschingen (DE)
(72) Erfinder: Koop, Matthias, 78166 Donaueschingen (DE); Irion, Manuel, 78607 Talheim (DE); Karnat, Bjorn, 79232 March (DE); Labriola, Veronica, 78054 Villingen-Schwenningen (DE)
(74) Vertreter: Westphal, Mussgnug & Partner Patentanwälte mbB

(57) **Zusammenfassung**

Die vorliegende Erfindung betrifft eine Planetenträgeranordnung eines Planetengetriebes, insbesondere eines Planetengetriebes eines Seitentürantriebes, umfassend einen vorzugsweise einstückigen Planetenträger (12) mit einem Flansch (18), der sich entlang einer Drehachse (APT) erstreckt und eine erste Seite (20) und eine zweite Seite (22) aufweist, mindestens ein Planetenrad (16), welches beabstandet zu der Drehachse (APT) um eine Planetenraddrehachse (APR) drehbar gelagert gehalten ist, wobei zwischen der ersten Seite (20) und der zweiten Seite (22) mindestens eine Aussparung (24) angeordnet ist, in welcher das mindestens eine Planetenrad (16) mit mindestens einer Planetenradachse (34) drehbar gelagert gehalten ist, wobei der Planetenträger (10) und das Planetenrad (16) aus Kunststoff und die Planetenradachse (34) aus Stahl oder Kunststoff bestehen. Weiterhin betrifft die Erfindung ein Verfahren zum Herstellen einer derartigen Planetenträgeranordnung (10).

## Beschreibung

Die vorliegende Erfindung betrifft eine Planetenträgeranordnung eines Planetengetriebes, insbesondere eines Planetengetriebes eines Seitentürantriebes, sowie ein Verfahren zum Herstellen einer derartigen Planetenträgeranordnung.

Seitentürantriebe sind aus dem Stand der Technik in unterschiedlichen Ausgestaltungen bekannt und dienen der automatisierten Betätigung von Seitentüren, insbesondere einer Schiebetür eines Kraftfahrzeuges. Derartige Seitentürantriebe umfassen typischer Weise ein Planetengetriebe, welches eine Untersetzung für einen Antrieb der Seitentür bereitstellt. Das Planetengetriebe umfasst dabei wenigstens einen auf einer Antriebswelle angeordneten Planetenträger, der eine Mehrzahl von Planetenräder beabstandet zu der Antriebswelle drehbar gelagert hält.

Aus dem Stand der Technik sind Seitentürantriebe mit einer Planetenträgeranordnung vorbekannt, die aus einem zweiteiligen Stahl-Planetenträger in einer Käfigform gebildet sind, wobei der Planetenträger auf eine Antriebswelle aufgepresst ist bzw. mit zwei Kunststoffwangen auf dieser montiert wird. Derartige Planetenträger werden in großer Stückzahl hergestellt und weisen den Nachteil auf, dass diese in der Montage aufwendig sind. Diese Planetenträgeranordnungen werden typischerweise aus einer Mehrzahl von unterschiedlichen Bauteilen zusammengesetzt und anschließend verschraubt oder verpresst. Weiterhin nachteilig an diesem Stand der Technik ist, dass eine Materialeinsparung zur Gewichtsreduzierung eines solchen Seitentürantriebs begrenzt ist und somit die Seitentürantriebe unnötig schwer sind.

Auch wenn die oben genannte Ausgangssituation insbesondere für Seitentürantriebe relevant ist, ist diese Ausgangssituation auch bei anderen Anwendungen von Planetenträgeranordnungen anzutreffen. Beispiele für derartige Planetenträgeranordnungen sind aus der DE 10 2005 023 542 A1, der DE 10 2015 119 803 A1 und der WO 2014/095966 A1 bekannt.

Es ist daher die Aufgabe der vorliegenden Erfindung, eine Planetenträgeranordnung eines Planetengetriebes, insbesondere eines Planetengetriebes eines Seitentürantriebs, sowie ein Verfahren zur Herstellung der Planetenträgeranordnung zu Verfügung zu stellen, welches die Montage der Planetenträgeranordnung vereinfacht, eine maximale Gewichtsreduzierung ermöglicht und die Bauteilkomplexität auf ein Minimum reduziert.

Diese Aufgabe wird mit den in den Ansprüchen 1, 3, 4, 7, 9, 10, 14, 15 16, 17, 18 und 20 angegebenen Merkmalen gelöst. Vorteilhafte Ausführungsformen sind Gegenstand der Unteransprüche.

Eine Ausführungsform der Erfindung betrifft eine Planetenträgeranordnung eines Planetengetriebes, insbesondere eines Planetengetriebes eines Seitentürantriebes, umfassend
- einen vorzugsweise einstückigen Planetenträger mit einem Flansch, der sich entlang einer Drehachse erstreckt und eine erste Seite und eine zweite Seite aufweist,
- mindestens ein Planetenrad, welches beabstandet zu der Drehachse um eine Planetenraddrehachse drehbar gelagert gehalten ist, wobei
- zwischen der ersten Seite und der zweiten Seite mindestens eine Aussparung angeordnet ist, in welcher das mindestens eine Planetenrad mit mindestens einer Planetenradachse drehbar gelagert gehalten ist, wobei
- der Planetenträger und das Planetenrad aus Kunststoff und die Planetenradachse aus Stahl bestehen.

Die Verwendung von Stahl als Planentenradachse hat den Vorteil, dass die Planetenradachse mit einem geringen Durchmesser versehen und/oder mit einem geringen Materialeinsatz bereitgestellt werden kann und trotzdem hohe Kräfte aufgenommen werden können.

Nach Maßgabe einer weiteren Ausführungsform ist die Planetenradachse an der ersten Seite in den Planetenträger eingepresst und an der zweiten Seite mit dem Planetenträger verstemmt oder umgekehrt.

In dieser Ausführungsform ist kein thermisches Fügeverfahren notwendig. Das Verstemmen ist ein gut beherrschbarer und günstiger Fertigungsschritt, so dass die Befestigung der Planetenradachse am Planetenträger auf vergleichsweise einfache Weise durchgeführt werden kann.

Ein Ausführungsbeispiel der Erfindung betrifft ein Verfahren zum Herstellen einer Planetenträgeranordnung nach der zuvor erörterten weiteren Ausführungsform, umfassend folgende Schritte:
- Einbringen des zumindest einen Planetenrads in die Aussparung,
- Einpressen der Planetenradachse in den Planetenträger von der ersten Seite, so dass die Planetenradachse das Planetenrad und die Aussparung durchdringt und von der zweiten Seite zugänglich ist, und
- Verstemmen der Planetenradachse von der zweiten Seite.

Mit diesem Verfahren lassen sich die oben beschriebenen technischen Effekte verwirklichen. Insbesondere ist es nicht notwendig, ein thermisches Fügeverfahren zu verwenden.

Eine Ausgestaltung der Erfindung betrifft eine Planetenträgeranordnung eines Planetengetriebes, insbesondere eines Planetengetriebes eines Seitentürantriebes, umfassend
- einen vorzugsweise einstückigen Planetenträger mit einem Flansch, der sich entlang einer Drehachse erstreckt und eine erste Seite und eine zweite Seite aufweist,
- mindestens ein Planetenrad, welches beabstandet zu der Drehachse um eine Planetenraddrehachse drehbar gelagert gehalten ist, wobei
- zwischen der ersten Seite und der zweiten Seite mindestens eine Aussparung angeordnet ist, in welcher das mindestens eine Planetenrad mit mindestens einer Planetenradachse drehbar gelagert gehalten ist, und
- der Planetenträger, das Planetenrad und die Planetenradachse aus Kunststoff bestehen.

Im Gegensatz zu der weiter oben beschriebenen Ausführungsform ist die Planetenträgeranordnung dieser Ausgestaltung ausschließlich aus Kunststoff gefertigt. Die Materialeigenschaften, beispielsweise das Wärmeausdehnungsverhalten, sind in dieser Ausführungsform sehr gleichmäßig, so dass keine Maßnahmen zum Ausgleichen der unterschiedlichen Materialeigenschaften getroffen werden müssen.

In einer weitergebildeten Ausgestaltung kann die Planetenradachse an der ersten Seite in den Planetenträger eingepresst und von der ersten Seite her mit den Planetenträger ultraschallverschweißt sein.

In dieser Ausgestaltung kann die Montage der Planetenträgeranordnung entweder ausschließlich von der ersten Seite her oder ausschließlich von der zweiten Seite her durchgeführt werden. Während der Montage ist es daher nicht notwendig, insbesondere den Planetenträger zu drehen, wodurch die Montage vereinfacht und verkürzt wird sowie die hierzu notwendigen Kosten gering gehalten werden.

Bei einer weitergebildeten Ausgestaltung kann die Planetenradachse wenigstens ein Rastmittel aufweisen, mit dem die Planetenradachse am Planetenträger gehalten ist.

Die Verwendung von Rastmitteln hat den Vorteil, dass die Befestigung der Planetenradachse am Planetenträger sehr schnell, zuverlässig und einfach erfolgen kann. Sobald die Planetenradachse in ihrer finalen Position befindet, ist sie am Planetenträger befestigt. Weitere Maßnahmen zum Befestigen sind nicht notwendig.

Nach einem weiteren Ausführungsbeispiel kann das Verfahren die folgenden Schritte umfassen:
- Einbringen des zumindest einen Planetenrads in die Aussparung,
- Einpressen der Planetenradachse in den Planetenträger von der ersten Seite, so dass die Planetenradachse das Planetenrad und die Aussparung durchdringt, und
- Ultraschallverschweißen der Planetenradachse mit dem Planetenträger von der ersten Seite her.

Dieses Ausführungsbeispiel des Verfahrens hat insbesondere den Vorteil, dass der Planetenträger während der Montage nicht gedreht werden muss. Ein erneutes Einspannen kann somit entfallen. Hierdurch wird die Montage vereinfacht und verkürzt. Auch wenn dieses Ausführungsbeispiel darauf gerichtet ist, die Planetenrad Achse von der ersten Seite in den Planetenträger einzupressen und auch von der ersten Seite zu verschweißen, so kann das Verfahren selbstverständlich auch so ausgeführt werden, dass die genannten Schritte ausschließlich von der zweiten Seite her ausgeführt werden.

Gemäß einem weitergebildeten Ausführungsbeispiel kann das Verfahren folgende Schritte aufweisen:
- Einbringen des zumindest einen Planetenrads in die Aussparung,
- Einpressen der Planetenradachse in den Planetenträger von der ersten Seite, so dass die Planetenradachse das Planetenrad und die Aussparung durchdringt, und
- Verrasten der Planetenradachse mit dem Planetenträger.

Wie bereits erwähnt, ist das Verrasten ein besonders einfacher und schneller Schritt, um die Planetenradachse mit dem Planetenträger zu verbinden. Die Montage der Planetenträgeranordnung lässt sich daher sehr schnell und kostengünstig durchführen.

Eine Umsetzung der Erfindung betrifft eine Planetenträgeranordnung eines Planetengetriebes, insbesondere eines Planetengetriebes eines Seitentürantriebes, umfassend
- einen vorzugsweise einstückigen Planetenträger mit einem Flansch, der sich entlang einer Drehachse erstreckt und eine erste Seite und eine zweite Seite aufweist,
- mindestens ein Planetenrad, welches beabstandet zu der Drehachse um eine Planetenraddrehachse drehbar gelagert gehalten ist, wobei
- zwischen der ersten Seite und der zweiten Seite mindestens eine Aussparung angeordnet ist, in welcher das mindestens eine Planetenrad drehbar gelagert gehalten ist, wobei
- der Planetenträger und das Planetenrad aus Kunststoff bestehen,
- auf der ersten Seite zumindest eine erste Umformung und auf der zweiten Seite zumindest eine zweite Umformung vorgesehen sind, die in die Aussparung hineinragen, und
- das Planetenrad von der ersten Umformung und der zweiten Umformung drehbar gelagert gehalten wird.

Die Umformungen können durch Verstemmen des Planetenträgers hergestellt werden, ohne dass eine thermische Behandlung des Planetenträgers notwendig ist. Weiterhin kann auf eine Planetenradachse verzichtet werden. Die Umformungen wirken als Lagerzapfen. Die Anzahl der Bauteile wird hierdurch verringert, zudem ist es nicht notwendig, eine energieintensive thermische Umformung durchzuführen.

Eine Umsetzung der Erfindung betrifft ein Verfahren zum Herstellen einer Planetenträgeranordnung nach der zuvor genannten Umsetzung, umfassend folgende Schritte:
- Einbringen des zumindest einen Planetenrads in die Aussparung,
- Ausbilden der ersten Umformung durch Umformen des Planetenträgers an der ersten Seite, und
- Ausbilden der zweiten Umformung durch Umformen des Planetenträgers an der zweiten Seite.

Die für die mit diesem Verfahren hergestellte Planetenträgeranordnung genannten Vorteile gelten gleichermaßen für das Verfahren gemäß dieser Umsetzung. Insbesondere sei auf die Reduzierung der Bauteile sowie die Möglichkeit hingewiesen, auf eine energieintensive thermische Umformung zu verzichten.

Bei einer weiteren Umsetzung des Verfahrens weist der Planetenträger an der ersten Seite eine erste Materialanhäufung und an der zweiten Seite eine zweite Materialanhäufung auf, wobei der Schritt des Ausbildens der ersten Umformung durch Umformen des Planetenträgers im Bereich der ersten Materialanhäufung, und der Schritt des Ausbildens der zweiten Umformung durch Umformen des Planetenträgers im Bereich der zweiten Materialanhäufung durchgeführt werden.

Mit den Materialanhäufung in können die Wandstärke und folglich die Festigkeit der ersten und der zweiten Umformung bestimmt und insbesondere vergrößert werden.

Eine fortgebildete Umsetzung der vorliegenden Erfindung zeichnet sich dadurch aus, dass der Planetenträger an der ersten Seite und/oder an der zweiten Seite Taschen aufweist, in welche die Planetenräder mit korrespondierenden Vorsprüngen einlegbar sind. Bei der Montage ist es notwendig, die Planetenräder konzentrisch zu den Planetenradachsen anzuordnen, um ein Durchführen der Planetenradachsen durch die Planetenräder zu ermöglichen. Die Verwendung der Taschen ermöglicht eine Vorfixierung der Planetenräder, bevor die Planetenradachsen durch diese durchgeführt werden. Die Montage wird hierdurch erleichtert.

Gemäß einer weiteren Umsetzung der vorliegenden Erfindung umfasst der Planententräger einen Bund, an welchem die Planetenradachse oder das Planentenrad anläuft. Das Vorsehen eines Bundes bewirkt, dass das Planetenrad axial auf der Planetenradachse festgelegt wird. Am Bund bildet sich eine Verschleißstelle aus, da sich das Planetenrad relativ zum feststehenden Planetenträger dreht. Der Bund kann so ausgeführt werden, dass die Reibung und der Verschleiß minimiert werden und das Planetenrad und der Planetenträger nicht infolge von Abrieb beschädigt werden.

Eine Ausführung der Erfindung betrifft eine Planetenträgeranordnung eines Planetengetriebes, insbesondere eines Planetengetriebes eines Seitentürantriebes, umfassend
- einen vorzugsweise zweiteiligen Planetenträger mit
- einem flanschartigen Käfig, der sich entlang einer Drehachse erstreckt, und
- einem mit dem Käfig unter Ausbildung einer Aussparung verbundenen Deckel,
- mindestens ein Planetenrad, welches beabstandet zu der Drehachse um eine Planetenraddrehachse in der Aussparung drehbar gelagert gehalten ist, wobei
- der Käfig, der Deckel und das Planetenrad aus Kunststoff und die Planetenradachse aus Stahl bestehen.

Im Gegensatz zu den zuvor vorgestellten Varianten der Planetenträgeranordnung ist in dieser Ausführung der Planetenträger zweiteilig ausgeführt. Während bei der Montage der Planetenträgeranordnung mit einem einteiligen Planetenträger die Planetenräder von der Seite in die Aussparung eingebracht und konzentrisch zu den Planetenradachsen angeordnet werden müssen, ist es bei der zweiteiligen Ausführung des Planetenträgers möglich, die Planetenräder auf die Planetenradachsen aufzustecken, bevor der Deckel mit dem Käfig verbunden wird. Da die konzentrische Ausrichtung vor dem Durchführen der Planetenradachse durch das Planetenrad entfallen kann, ist die Montage im Vergleich zu einem einstückigen Planetenträger einfacher. Aufgrund der Tatsache, dass die Planetenradachse aus Stahl besteht, lässt sich die Planetenradachse mit einer hohen Festigkeit und einem vergleichsweise geringen Durchmesser und/oder mit einem geringen Materialeinsatz herstellen.

Eine Ausgestaltung der Erfindung betrifft ein Verfahren zum Herstellen einer Planetenträgeranordnung nach der zuvor diskutierten Ausführung, umfassend folgende Schritte:
- Bereitstellen des Käfigs durch Umspritzen der Planetenradachsen,
- Aufstecken der Planetenräder auf die Planentenradachsen, und
- Befestigen des Deckels am Käfig oder an den Planetenradachsen.

Wie bereits erwähnt, ist das Aufstecken der Planetenräder auf die Planetenradachsen im Vergleich zu dem konzentrischen Ausrichten der Planetenräder vor dem Durchführen der Planetenradachse deutlich einfacher, so dass sich die Montage des zweiteiligen Planetenträgers einfacher gestaltet.

Eine Weiterbildung der Erfindung betrifft eine Planetenträgeranordnung eines Planetengetriebes, insbesondere eines Planetengetriebes eines Seitentürantriebes, umfassend
- einen vorzugsweise zweiteiligen Planetenträger mit
- einem flanschartigen Käfig, der sich entlang einer Drehachse erstreckt, und
- einem mit dem Käfig unter Ausbildung einer Aussparung verbundenen Deckel,
- mindestens ein Planetenrad, welches mittels einer Planetenradachse beabstandet zu der Drehachse um eine Planetenraddrehachse in der Aussparung drehbar gelagert gehalten ist, wobei
- der Käfig, der Deckel und das Planetenrad und die Planetenradachse aus Kunststoff bestehen und die Planetenradachse vom Käfig oder vom Deckel gebildet wird.

In dieser Weiterbildung besteht die Planetenträgeranordnung ausschließlich aus Kunststoff, so dass auf Maßnahmen zum Ausgleich von unterschiedlichen Materialeigenschaften verzichtet werden kann, wie es beispielsweise bei der Verwendung von Stahl als Material für die Planetenradachsen notwendig sein kann. Darüber hinaus ist es in dieser Weiterbildung vorgesehen, dass die Planetenradachse vom Käfig oder vom Deckel gebildet wird. Folglich bildet die Planetenradachse kein zusätzliches Bauteil, wodurch die Anzahl der Bauteile verringert wird.

Gemäß einer fortentwickelten Weiterbildung umfasst das Verfahren die folgenden Schritte:
- Bereitstellen des Käfigs, der die Planetenradachse bildet,
- Aufstecken des Planetenrads auf die Planentenradachse, und
- Befestigen des Deckels am Käfig oder an der Planetenradachse.

In dieser Weiterbildung des Verfahrens ist es auf sehr einfache Weise möglich, die Planetenträgeranordnung zu fertigen. Aufgrund der Tatsache, dass die Planetenradachse vom Käfig gebildet wird, entfällt der Schritt des Verbindens der Planetenradachse mit dem Käfig. Darüber hinaus wird die Montage erleichtert, da keine logistischen Maßnahmen zum Vorhalten der Planetenradachse mehr notwendig sind. Auch wenn diese Weiterbildung darauf gerichtet ist, dass die Planetenradachse vom Käfig gebildet wird, gelten die Vorteile gleichermaßen für den Fall, dass die Planetenradachse vom Deckel gebildet wird.

Eine Ausbildung der Erfindung betrifft eine Planetenträgeranordnung eines Planetengetriebes, insbesondere eines Planetengetriebes eines Seitentürantriebes, umfassend
- einen zweiteiligen Planetenträger mit
- einem flanschartigen Käfig der sich entlang einer Drehachse erstreckt, und
- einem mit dem Käfig unter Ausbildung einer Aussparung verbundenen Deckel,
- mindestens ein Planetenrad, welches mittels einer Planetenradachse beabstandet zu der Drehachse um eine Planetenraddrehachse in der Aussparung drehbar gelagert gehalten ist, wobei
- der Käfig, der Deckel, das Planetenrad und die Planetenradachse aus Kunststoff bestehen, und
- die Planetenradachse einen vom Käfig gebildeten ersten Planetenrad-Achsenabschnitt und einen vom Deckel gebildeten zweiten Planetenrad-Achsenabschnitt aufweist, die ineinander einbringbar sind.

In dieser Ausbildung kann einer der Planetenrad-Achsenabschnitte rohrförmig ausgebildet sein, so dass der andere Planetenrad-Achsenabschnitt in den rohrförmigen Planetenrad-Achsenabschnitt eingebracht werden kann. Beim Einbringen wird der Deckel in Bezug auf den Käfig bereits positioniert, so dass der nachfolgende Verbindungsschritt auf eine relativ einfache Weise nicht geführt werden kann.

Eine weitere Ausbildung ist dadurch gekennzeichnet, dass der Käfig aus einem ersten Kunststoff und der Deckel aus einem zweiten Kunststoff bestehen.

In dieser Ausbildung ist es möglich, diejenigen Kunststoff, der mit dem Planetenrad in Kontakt kommt, so zu wählen, dass er entsprechend gute Laufeigenschaften aufweist. Derjenige Kunststoff, der nicht mit dem Planetenrad in Kontakt tritt, kann eine besonders hohe Stabilität aufweisen, beispielsweise kann dieser Kunststoff faserverstärkt sein. Somit lassen sich einerseits eine hohe Stabilität und andererseits gute Laufeigenschaften realisieren.

Eine weitere Ausführungsform der Erfindung betrifft ein Verfahren zum Herstellen einer Planetenträgeranordnung nach einem der zuvor erörterten Ausbildungen, umfassend folgende Schritte:
- Bereitstellen des Käfigs, der den ersten Planetenrad-Achsenabschnitt bildet,
- Bereitstellen des Deckels, der den zweiten Planetenrad-Achsenabschnitt bildet,
- Einbringen des ersten Planetenrad-Achsenabschnitts und des zweiten Planetenrad-Achsenabschnitt ineinander,
- Aufstecken der Planetenräder auf den ersten Planetenrad-Achsenabschnitt oder auf den zweiten Planetenrad-Achsenabschnitt, und
- Befestigen des Deckels am Käfig oder an den Planetenradachsen.

Wie bereits erwähnt, werden beim Einbringen der beiden Planetenrad-Achsenabschnitte der Deckel und der Käfig zueinander positioniert, so dass die weiteren Befestigungsschritte auf relativ einfache Weise durchgeführt werden können.

Gemäß einer weiterentwickelten Ausführungsform verfügen der Deckel, der Käfig und/oder die Planetenradachsen über Rastmittel, mit welchen der Deckel an den Planetenradachsen oder am Käfig durch Verrasten befestigt wird.

Wie ebenfalls bereits erwähnt, ist das Verrasten ein besonders einfacher und schnell durchzuführender Verbindungsschritt.

Eine fortgebildete Ausführungsform zeichnet sich dadurch aus, dass der Deckel an den Planetenradachsen oder am Käfig durch Ultraschallverschweißen befestigt wird. Die Schweißzeiten sind sehr gering, so dass das Ultraschallschweißen mit einer hohen Wirtschaftlichkeit durchgeführt werden kann. Die Fügepartner werden nur im Schweißbereich geringfügig erwärmt und das umliegende Material nicht geschädigt.

Beispielhafte Ausführungsformen der Erfindung werden im Folgenden unter Bezugnahme auf die beigefügten Zeichnungen näher erläutert. Es zeigen
- Figur 1: eine perspektivische Darstellung einer Planetenträgeranordnung mit einem Planetenträger,
- Figur 2A: ein erstes Ausführungsbeispiel einer erfindungsgemäßen Planetenträgeranordnung anhand einer in Figur 1 annähernd definierten Schnittebene,
- Figur 2B: eine ausschnittsweise Seitenansicht entlang der Drehachse auf den Planetenträger gesehen von der Aussparung aus,
- Figur 2C: eine isolierte Seitenansicht auf ein Planetenrad,
- Figur 3: ein zweites Ausführungsbeispiel einer erfindungsgemäßen Planetenträgeranordnung,
- Figur 4: ein drittes Ausführungsbeispiel einer erfindungsgemäßen Planetenträgeranordnung,
- Figur 5A: ein viertes Ausführungsbeispiel einer erfindungsgemäßen Planetenträgeranordnung,
- Figur 5B: eine isolierte Darstellung des in Figur 5A gekennzeichneten Bereichs X ohne Planetenrad,
- Figur 6: ein fünftes Ausführungsbeispiel einer erfindungsgemäßen Planetenträgeranordnung,
- Figur 7: ein sechstes Ausführungsbeispiel einer erfindungsgemäßen Planetenträgeranordnung,
- Figur 8: ein siebtes Ausführungsbeispiel einer erfindungsgemäßen Planetenträgeranordnung, und
- Figur 9: ein achtes Ausführungsbeispiel einer erfindungsgemäßen Planetenträgeranordnung, jeweils anhand der in Figur 1 annähernd definierten Schnittebene.

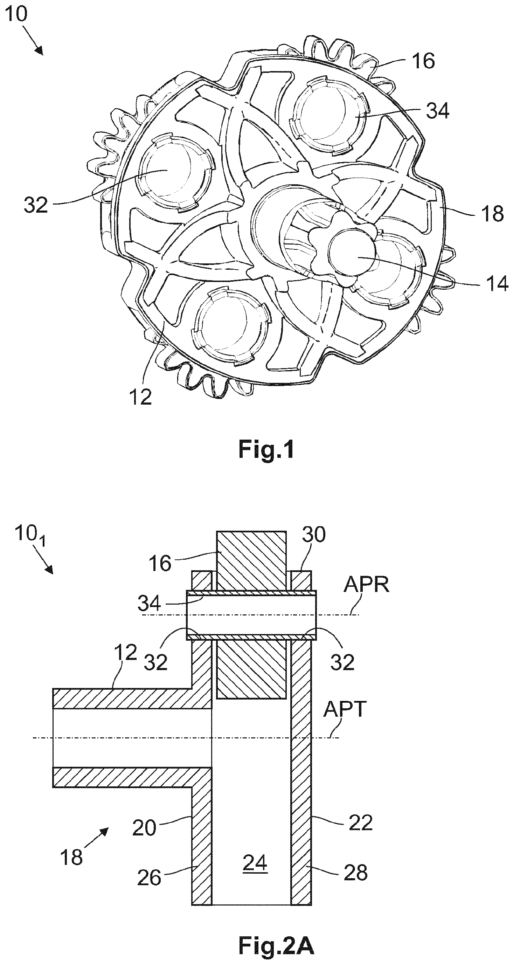

Nachfolgend werden unter Bezugnahme auf die Figuren 1 bis 9 acht verschiedene Ausführungsbeispiele einer erfindungsgemäßen Planetenträgeranordnung 10 im Detail beschrieben. In den unterschiedlichen Ausführungsbeispielen sind gleiche bzw. funktional gleiche Teile mit gleichen Bezugsziffern versehen.

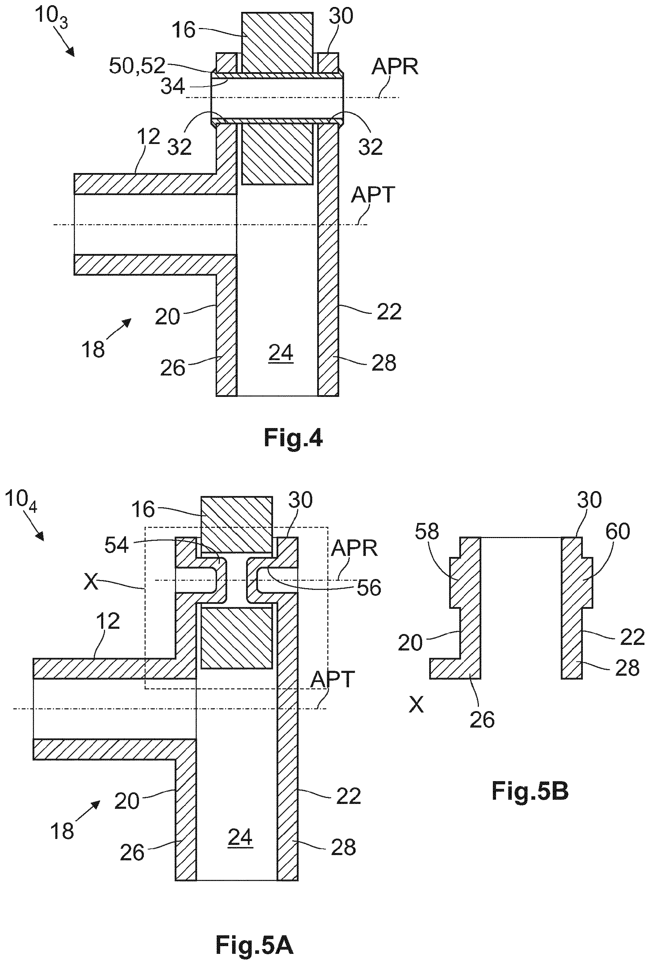

Die Figur 1 dient zur Beschreibung des grundlegenden Aufbaus der Planetenträgeranordnung 10 und soll daher keinem Ausführungsbeispiel direkt zugeordnet sein, auch wenn es Ähnlichkeiten zum in Figur 4 dargestellten dritten Ausführungsbeispiel der Planetenträgeranordnung 10₃ aufweist.

Die in Figur 1 dargestellte Planetenträgeranordnung 10₁ umfasst einen Planetenträger 12, eine Antriebswelle 14 und vier Planetenräder 16. Der Planetenträger 12 umfasst einen Flansch 18, der entlang einer Drehachse APT bereichsweise die Antriebswelle 14 umgibt.

Wie Figur 2A zu entnehmen ist, ist der Planetenträger 12 um die Drehachse APT rotationssymmetrisch ausgeformt und der Flansch 18 weist eine erste Seite 20 und eine zweite Seite 22 auf. Zwischen der ersten Seite 20 und der zweiten Seite 22 ist eine Aussparung 24 angeordnet. Die erste Seite 20 bildet in dem Flansch 18 eine erste Wandung 26 und die zweite Seite 22 in dem Flansch 18 eine zweite Wandung 28, welche die Aussparung 24 entlang der Drehachse APT seitlich begrenzen.

In den Planetenträger 12 sind vier Aussparungen 24 eingeformt oder eingearbeitet, die umfangssymmetrisch jeweils von einer äußeren Mantelfläche 30 zugänglich sind und sich zwischen der ersten Wandung 26 und der zweiten Wandung 28 erstrecken.

Die erste Seite 20 bzw. erste Wandung 26 und die zweite Seite 22 bzw. zweite Wandung 28 weisen darüber hinaus vier über den Umfang gleichmäßig verteilte Öffnungen 32 auf, welche die jeweilige erste Seite 20 und die zweite Seite 22 mit der Aussparung 24 verbinden. Die Öffnungen 32 sind im Umfang zentriert zu der jeweiligen Aussparung 24 angeordnet.

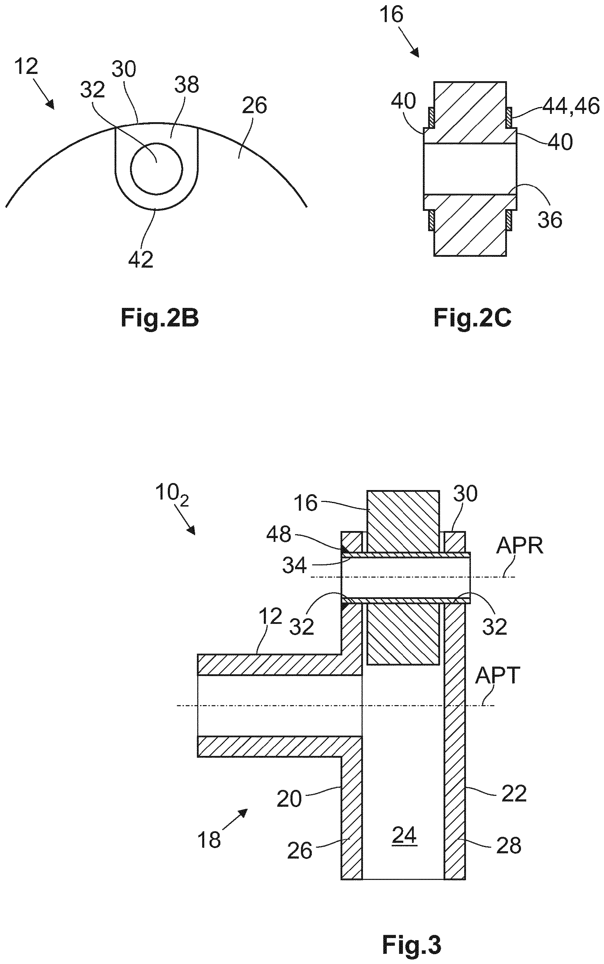

In jeder Aussparung 24 ist jeweils eines der Planetenräder 16 eingesetzt, das bereichsweise über die Mantelfläche 30 des Flansches 18 herausragt und mittels einer Planetenradachse 34 in der Aussparung 24 um eine Planetenraddrehachse APR drehbar gelagert gehalten ist. Die Planetenräder 16 sind in der Planetenraddrehachse APR an die Größe der Aussparung 24 angepasst. Die Planetenräder 16 sind jeweils in der Planetenraddrehachse APR mit einer Durchgangsbohrung 36 versehen (siehe Figur 2C), durch die jeweils eine Planetenradachse 34 gesteckt ist, auf der das Planetenrad 16 drehbar gelagert ist. Dementsprechend sind jeweils eine Öffnung 32, eine Planetenradachse 34, und ein Planetenrad 16 koaxial zu einer Planetenraddrehachse APR ausgerichtet, wobei die Planetenraddrehachse APR parallel und beabstandet zu der Drehachse APT angeordnet ist. Die Aussparungen sind dabei derart bemessen, dass die Planetenträger 12 in der Aussparung 24 um die jeweilige Planetenradachse 34 frei drehbar sind.

Bei dem in Figur 2A dargestellten ersten Ausführungsbeispiel der Planetenträgeranordnung 10₁ bestehen der Planetenträger 12 und das Planetenrad 16 aus Kunststoff und die Planetenradachse 34 aus Stahl. Die Montageschritte werden nun unter Bezugnahme auf die Figuren 2B und 2C beschrieben. Figur 2B zeigt eine Ansicht von der Aussparung 24 aus auf die erste Wandung 26 des Planetenträgers 12 gesehen, wobei die zweite Wandung 28 genauso aufgebaut sein kann. Man erkennt, dass auf der ersten Wandung 26 eine Tasche 38 in Form einer Vertiefung angeordnet ist, die sich von der äußeren Mantelfläche 30 radial nach innen zur Drehachse APT hin soweit erstreckt, dass sie die Öffnungen 32 umschließen. Aus Figur 2C ist ersichtlich, dass das Planetenrad 16 auf seinen Stirnseiten jeweils einen Vorsprung 40 aufweist, der vom Durchmesser her der Breite der Tasche 38 entspricht. Am geschlossenen inneren Ende weist die Tasche 38 einen halbkreisförmigen Abschnitt 42 auf, dessen Durchmesser ebenfalls dem Durchmesser des Vorsprungs entspricht. Der halbkreisförmige Abschnitt 42 ist konzentrisch zur Öffnung 32 und folglich zur Planetenraddrehachse APR angeordnet. Zur Montage wird das Planetenrad 16 von außen radial in die Aussparung 24 und die Tasche 38 eingebracht, bis dass der Vorsprung 40 an dem halbkreisförmigen Abschnitt 42 anliegt. Das Planetenrad 16 ist dann konzentrisch zur Öffnung 32 des Planetenträgers 12 angeordnet, so dass die Planetenradachse 34 durch die Öffnung 32 des Planetenträgers 12 und durch die Durchgangsbohrung 36 des Planetenrads 16 durchgeführt werden kann. Im ersten Ausführungsbeispiel wird die Planetenradachse 34 von der ersten Seite 20 her in den Planetenträger 12 so eingepresst, dass die Planetenradachse 34 das Planetenrad 16 und die Öffnung 32 vollständig durchdrungen hat und von der zweiten Seite 22 her zugänglich ist. Anschließend wird die Planetenradachse 34 von der zweiten Seite 22 her verstemmt. Je nach Anordnung der Werkzeuge wird der Planetenträger 12 nach dem Einpressen und vor dem Verstemmen gedreht. Das Planetenrad 16 ist nun drehbar im Planetenträger 12 gelagert. Ein Einpressen von der zweiten Seite 22 her und ein Verstemmen von der ersten Seite 20 her ist ebenfalls möglich.

Aus der Figur 2C erkennt man, dass die Planetenträgeranordnung 10₁ einen Bund 44 umfasst, der dort als eine Anlaufscheibe 46 ausgeführt ist. Die Anlaufscheibe 46 ist auf den Vorsprung 40 des Planetenrads 16 aufgesteckt. Am Bund 44 läuft das Planetenrad 16 am Planetenträger 12 an. Das Material des Bundes 44 ist so bemessen, dass an der Kontaktstelle zwischen dem Planetenrad 16 und dem Planetenträger 12 eine möglichst geringe Reibung und somit ein geringer Verschleiß entstehen.

Das in Figur 3 dargestellte zweite Ausführungsbeispiel der Planetenträgeranordnung 10₂ unterscheidet sich vom Aufbau her nur unwesentlich von der Planetenträgeranordnung 10₁ des ersten Ausführungsbeispiels. In diesem Fall bestehen nicht nur der Planetenträger 12 und das Planetenrad 16 aus Kunststoff, sondern auch die Planetenradachse 34. Hierdurch lässt sich ein etwas anderer Montageweg beschreiten. Wie auch bei der aus Stahl bestehenden Planetenradachse 34 wird die Planetenradachse 34 aus Kunststoff von der ersten Seite 20 in den Planetenträger 12 eingepresst, bis dass die Planetenradachse 34 bündig an der ersten Seite 20 anliegt, wie in Figur 3 gezeigt. Anschließend wird die Planetenradachse 34 von der ersten Seite 20 her mit dem Planetenträger 12 62 ultraschallverschweißt, so dass eine Schweißnaht 48 entsteht. Das Einpressen und das Verschweißen können auch von der zweiten Seite 20 22 her erfolgen (nicht dargestellt).

Auch bei dem in Figur 4 dargestellten dritten Ausführungsbeispiel der Planetenträgeranordnung 10₃ bestehen der Planetenträger 12, das Planetenrad 16 und die Planetenradachse 34 aus Kunststoff. Die Planetenradachse 34 weist in diesem Ausführungsbeispiel Rastmittel 50 auf, welche in Form von elastischen Nasen 52 ausgebildet und an beiden Enden angeordnet sind. Beim Durchführen durch die Öffnungen 32 und die Durchgangsbohrungen 36 werden die Nasen 52 nach innen bewegt, um insbesondere dann, wenn sie die Öffnungen 32 durchquert haben, wieder in die Ausgangsposition zurückzukehren. Dann ist die Planetenradachse 34 im Planetenträger 12 befestigt, ohne dass weitere Maßnahmen getroffen werden müssen.

In Figur 5A ist ein viertes Ausführungsbeispiel der Planetenträgeranordnung 10₄ gezeigt. In diesem Ausführungsbeispiel bildet der aus Kunststoff bestehende Planetenträger 12 an der ersten Wandung 26 eine erste Umformung 54 und an der zweiten Wandung 28 eine zweite Umformung 56, die in die Aussparung 24 hineinragen. Das Planetenrad 16 ist drehbar um die beiden Umformungen 54, 56 gelagert, so dass in diesem Ausführungsbeispiel die Umformungen 54, 56 die Funktion der Planetenradachse 34 übernehmen. Zur Montage wird das Planetenrad 16 wie auch in den zuvor beschriebenen Ausführungsbeispielen mit einer radial nach innen zur Drehachse APT des Planetenträgers 12 gerichteten Bewegung in die Aussparung 24 eingebracht, bis dass das Planetenrad 16 die gewünschte Position erreicht hat. Anschließend wird der Planetenträger 12 von der ersten Seite 20 und von der zweiten Seite 22 zur Aussparung 24 hin mit einem geeigneten Werkzeug in die Durchgangsbohrung 36 des Planetenrads 16 eingedrückt, wodurch die beiden Umformungen 54, 56 entstehen.

In der Figur 5B ist der Planetenträger 12 im in Figur 5A definierten Ausschnitt X vor dem Eindrücken gezeigt. Man erkennt, dass der Planetenträger 12 an der ersten Seite 20 eine erste Materialanhäufung 58 und an der zweiten Seite 22 eine zweite Materialanhäufung 60 aufweist. Das Eindrücken wird im Bereich der ersten und der zweiten Materialanhäufung 58, 60 vorgenommen, wodurch ausreichend Material für die erste und die zweite Umformung 54, 56 zur Verfügung steht.

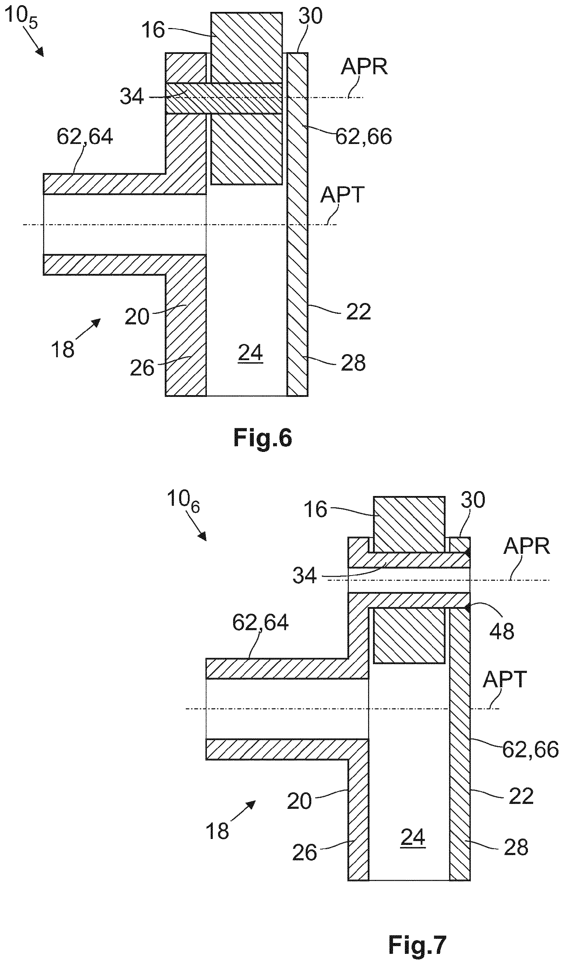

In Figur 6 ist ein fünftes Ausführungsbeispiel der erfindungsgemäßen Planetenträgeranordnung 10₅ dargestellt. Im Gegensatz zu den zuvor diskutierten Ausführungsbeispielen weist die Planetenträgeranordnung 10₅ in diesem Ausführungsbeispiel einen zweiteiligen Planetenträger 62 mit einem flanschartigen Käfig 64 und einem Deckel 66 auf, der mit dem Käfig 64 verbunden werden kann. Im fünften Ausführungsbeispiel besteht die Planetenradachse 34 aus Stahl, während das Planetenrad 16, der Käfig 64 und der Deckel 66 aus Kunststoff bestehen. Der Käfig 64 wird dadurch hergestellt, dass die Planetenradachse 34 mit dem Kunststoff umspritzt wird. Folglich ist die Planetenradachse 34 fest im Käfig 64 verankert. Anschließend wird das Planetenrad 16 auf die Planetenradachse 34 aufgesteckt und der Deckel 66 mit dem Käfig 64 oder mit der Planetenradachse 34 verbunden. Hierzu kann der Deckel 66 die bereits erwähnten Rastmittel 50 aufweisen, welche in die Planetenrad 16 Achse oder in den Käfig 64 eingreifen (nicht dargestellt).

In Figur 7 ist ein sechstes Ausführungsbeispiel der erfindungsgemäßen Planetenträgeranordnung 10₆ dargestellt, bei welcher der Käfig 64 ebenfalls aus Kunststoff besteht und gleichzeitig die Planetenradachse 34 bildet. Insofern ist keine separate Planetenradachse 34 vorhanden. Das Planetenrad 16 wird auf die Planetenradachse 34 aufgeschoben und anschließend der Deckel 66 durch Ultraschallschweißen an der Planetenradachse 34 befestigt, so dass eine Schweißnaht 48 entsteht. Alternativ kann der Deckel 66 auch direkt mit dem Käfig 64 befestigt werden (nicht dargestellt).

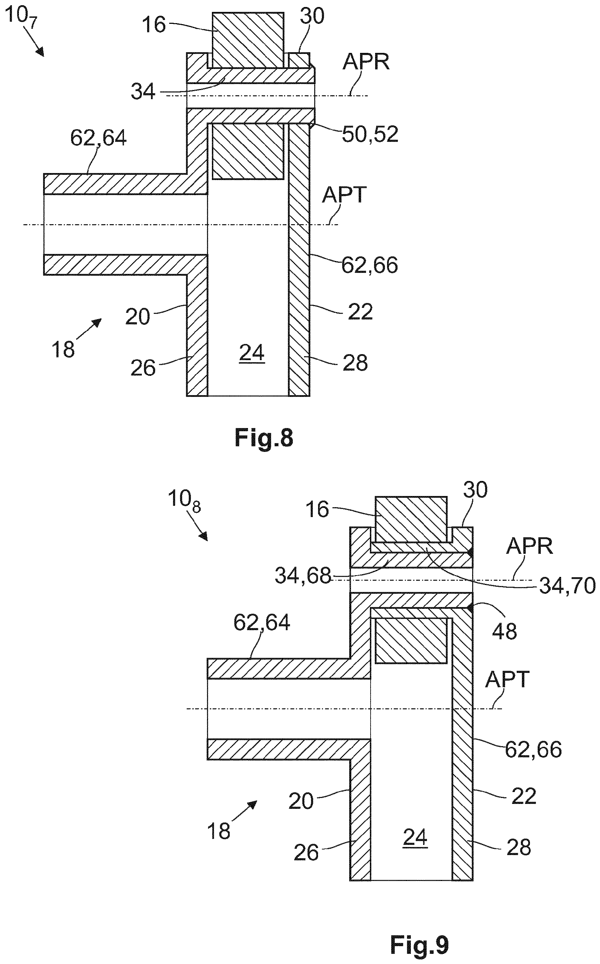

Auch im in Figur 8 dargestellten siebten Ausführungsbeispiel der erfindungsgemäßen Planetenträgeranordnung 10₇ wird die Planetenradachse 34 vom Käfig 64 gebildet und weist an ihrem freien Ende das bereits beschriebene Rastmittel 50 auf. Bei der Montage werden zunächst das Planetenrad 16 und anschließend der Deckel 66 auf die Planetenradachse 34 aufgeschoben. Beim Aufschieben des Deckels auf die Planetenradachse 34 verrastet der Deckel 66 mit der Planetenradachse 34. Weitere Schritte zum Befestigen des Deckels am Käfig 64 sind nicht notwendig.

In Figur 9 ist ein achtes Ausführungsbeispiel der erfindungsgemäßen Planetenträgeranordnung 10s gezeigt. Auch in diesem Ausführungsbeispiel bestehen der Käfig 64, das Planetenrad 16 und der Deckel 66 aus Kunststoff. Die Planetenradachse 34 weist in diesem Ausführungsbeispiel einen vom Käfig 64 gebildeten ersten Planetenrad-Achsenabschnitt 68 und einen vom Deckel 66 gebildeten zweiten Planetenrad-Achsenabschnitt 70 auf. Der Innendurchmesser des rohrförmigen zweiten Planetenrad-Achsenabschnitts 70 entspricht in etwa dem Außendurchmesser des ersten Planetenrad-Achsenabschnitts 68, so dass die beiden Planetenrad-Achsenabschnitte 68, 70 ineinander eingebracht werden können. Im eingebrachten Zustand umschließt der zweite Planetenrad-Achsenabschnitt 70 den ersten Planetenrad-Achsenabschnitt 68, wobei auch der umgekehrte Fall möglich ist.

Der Käfig 64 besteht aus einem ersten Kunststoff und der Deckel 66 aus einem zweiten Kunststoff, die so gewählt sind, dass sie mittels Ultraschallschweißens miteinander verschweißt werden können, so dass die in Figur 9 dargestellte Schweißnaht 48 entsteht und der Deckel 66 am Käfig 64 befestigt ist. Eine Befestigung des Deckels 66 mit in Figur 9 nicht dargestellten Rastmitteln 50 ist ebenfalls denkbar. Der erste Kunststoff wird hauptsächlich so gewählt, um dem Planetenträger 62 die gewünschte Stabilität und Zugfestigkeit zu verleihen, während der zweite Kunststoff so gewählt wird, dass er auf das Planetenrad 16 abgestimmte Laufeigenschaften aufweist. Der erste Kunststoff kann beispielsweise faserverstärkt sein. Folglich weist die Planetenträgeranordnung 10s nach dem achten Ausführungsbeispiel einerseits eine sehr hohe Festigkeit und andererseits sehr gute Laufeigenschaften auf.

### Bezugszeichenliste

- 10: Planetenträgeranordnung
- 10₁ bis 10₈: Planetenträgeranordnung
- 12: einstückiger Planetenträger
- 14: Antriebswelle
- 16: Planetenrad
- 18: Flansch

- 20: erste Seite
- 22: zweite Seite
- 24: Aussparung
- 26: erste Wandung
- 28: zweite Wandung

- 30: Mantelfläche
- 32: Öffnung
- 34: Planetenradachse
- 36: Durchgangsbohrung
- 38: Tasche

- 40: Vorsprung
- 42: halbkreisförmiger Abschnitt
- 44: Bund
- 46: Anlaufscheibe
- 48: Schweißnaht

- 50: Rastmittel
- 52: Nase
- 54: erste Umformung
- 56: zweite Umformung
- 58: erste Materialanhäufung

- 60: zweite Materialanhäufung
- 62: zweiteiliger Planetenträger
- 64: Käfig
- 66: Deckel
- 68: erster Planetenrad-Achsenabschnitt

- 70: zweiter Planetenrad-Achsenabschnitt

- APT: Drehachse
- APR: Planetenraddrehachse

## Patentansprüche

1. Planetenträgeranordnung eines Planetengetriebes, insbesondere eines Planetengetriebes eines Seitentürantriebes, umfassend
- einen vorzugsweise einstückigen Planetenträger (12) mit einem Flansch (18), der sich entlang einer Drehachse (APT) erstreckt und eine erste Seite (20) und eine zweite Seite (22) aufweist,
- mindestens ein Planetenrad (16), welches beabstandet zu der Drehachse (APT) um eine Planetenraddrehachse (APR) drehbar gelagert gehalten ist, wobei
- zwischen der ersten Seite (20) und der zweiten Seite (22) mindestens eine Aussparung (24) angeordnet ist, in welcher das mindestens eine Planetenrad (16) mit mindestens einer Planetenradachse (34) drehbar gelagert gehalten ist,
**dadurch gekennzeichnet, dass** der Planetenträger (10) und das Planetenrad (16) aus Kunststoff und die Planetenradachse (34) aus Stahl bestehen.

2. Planetenträgeranordnung nach Anspruch 1,
**dadurch gekennzeichnet, dass** die Planetenradachse (34) an der ersten Seite (20) in den Planetenträger (10) eingepresst und an der zweiten Seite (22) mit dem Planetenträger (10) verstemmt ist oder umgekehrt.

3. Verfahren zum Herstellen einer Planetenträgeranordnung nach Anspruch 2, umfassend folgende Schritte
- Einbringen des zumindest einen Planetenrads (16) in die Aussparung (24),
- Einpressen der Planetenradachse (34) in den Planetenträger (10) von der ersten Seite (20), so dass die Planetenradachse (34) das Planetenrad (16) und die Aussparung (24) durchdringt und von der zweiten Seite (22) zugänglich ist, und
- Verstemmen der Planetenradachse (34) von der zweiten Seite (22).

4. Planetenträgeranordnung eines Planetengetriebes, insbesondere eines Planetengetriebes eines Seitentürantriebes, umfassend
- einen vorzugsweise einstückigen Planetenträger (12) mit einem Flansch (18), der sich entlang einer Drehachse (APT) erstreckt und eine erste Seite (20) und eine zweite Seite (22) aufweist,
- mindestens ein Planetenrad (16), welches beabstandet zu der Drehachse (APT) um eine Planetenraddrehachse (APR) drehbar gelagert gehalten ist, wobei
- zwischen der ersten Seite (20) und der zweiten Seite (22) mindestens eine Aussparung (24) angeordnet ist, in welcher das mindestens eine Planetenrad (16) mit mindestens einer Planetenradachse (34) drehbar gelagert gehalten ist,
**dadurch gekennzeichnet, dass** der Planetenträger (10), das Planetenrad (16) und die Planetenradachse (34) aus Kunststoff bestehen.

5. Planetenträgeranordnung nach Anspruch 4,
**dadurch gekennzeichnet, dass** die Planetenradachse (34) an der ersten Seite (20) in den Planetenträger (10) eingepresst und von der ersten Seite (20) her mit den Planetenträger (10) ultraschallverschweißt ist.

6. Planetenträgeranordnung nach Anspruch 4,
**dadurch gekennzeichnet, dass** die Planetenradachse (34) wenigstens ein Rastmittel (50) aufweist, mit dem die Planetenradachse (34) am Planetenträger (10) gehalten ist.

7. Verfahren zum Herstellen einer Planetenträgeranordnung (10) nach Anspruch 5, umfassend folgende Schritte
- Einbringen des zumindest einen Planetenrads (16) in die Aussparung (24),
- Einpressen der Planetenradachse (34) von der ersten Seite (20), so dass die Planetenradachse (34) das Planetenrad (16) und die Aussparung (24) durchdringt, und
- Ultraschallverschweißen der Planetenradachse (34) mit dem Planetenträger (10) von der ersten Seite (20) her.

8. Verfahren zum Herstellen einer Planetenträgeranordnung nach Anspruch 6, umfassend folgende Schritte
- Einbringen des zumindest einen Planetenrads (16) in die Aussparung (24),
- Einpressen der Planetenradachse (34) von der ersten Seite (20), so dass die Planetenradachse (34) das Planetenrad (16) und die Aussparung (24) durchdringt, und
- Verrasten der Planetenradachse (34) mit dem Planetenträger (10).

9. Planetenträgeranordnung eines Planetengetriebes, insbesondere eines Planetengetriebes eines Seitentürantriebes, umfassend
- einen vorzugsweise einstückigen Planetenträger (12) mit einem Flansch (18), der sich entlang einer Drehachse (APT) erstreckt und eine erste Seite (20) und eine zweite Seite (22) aufweist,
- mindestens ein Planetenrad (16), welches beabstandet zu der Drehachse (APT) um eine Planetenraddrehachse (APR) drehbar gelagert gehalten ist, wobei
- zwischen der ersten Seite (20) und der zweiten Seite (22) mindestens eine Aussparung (24) angeordnet ist, in welcher das mindestens eine Planetenrad (16) drehbar gelagert gehalten ist,
**dadurch gekennzeichnet, dass**
- der Planetenträger (10) und das Planetenrad (16) aus Kunststoff bestehen,
- auf der ersten Seite (20) zumindest eine erste Umformung (54) und auf der zweiten Seite (22) zumindest eine zweite Umformung (56) vorgesehen sind, die in die Aussparung (24) hineinragen, und
- das Planetenrad (16) von der ersten Umformung (54) und der zweiten Umformung (56) drehbar gelagert gehalten wird.

10. Verfahren zum Herstellen einer Planetenträgeranordnung nach Anspruch 9, umfassend folgende Schritte
- Einbringen des zumindest einen Planetenrads (16) in die Aussparung (24),
- Ausbilden der ersten Umformung (54) durch Umformen des Planetenträgers (12) an der ersten Seite (20), und
- Ausbilden der zweiten Umformung (56) durch Umformen des Planetenträgers (12) an der zweiten Seite (22).

11. Verfahren nach Anspruch 10,
**dadurch gekennzeichnet, dass**
- der Planetenträger (10) an der ersten Seite (20) eine erste Materialanhäufung (58) und an der zweiten Seite (22) eine zweite Materialanhäufung (60) aufweist, und
- der Schritt des Ausbildens der ersten Umformung (54) durch Umformen des Planetenträgers (12) im Bereich der erste Materialanhäufung (58), und
- der Schritt des Ausbildens der zweiten Umformung (56) durch Umformen des Planetenträgers (12) im Bereich der zweite Materialanhäufung (60) durchgeführt werden.

12. Planetenträgeranordnung nach einem der Ansprüche 1, 2, 4 bis 6 oder 9,
**dadurch gekennzeichnet, dass** der Planetenträger (10) an der ersten Seite (20) und/oder an der zweiten Seite (22) Taschen (38) aufweist, in welche die Planetenräder (16) mit korrespondierenden Vorsprüngen (40) einlegbar sind.

13. Planetenträgeranordnung nach Anspruch 12,
**dadurch gekennzeichnet, dass** der Planetenträger (12) einen Bund (44) umfasst, an welchem die Planetenradachse (34) oder das Planetenrad (16) anläuft.

14. Planetenträgeranordnung eines Planetengetriebes, insbesondere eines Planetengetriebes eines Seitentürantriebes, umfassend
- einen vorzugsweise zweiteiligen Planetenträger (62) mit
- einem flanschartigen Käfig (64) der sich entlang einer Drehachse (APT) erstreckt, und
- einem mit dem Käfig (64) unter Ausbildung einer Aussparung (24) verbundenen Deckel (66),
- mindestens ein Planetenrad (16), welches beabstandet zu der Drehachse (APT) um eine Planetenraddrehachse (APR) in der Aussparung (24) drehbar gelagert gehalten ist, **dadurch gekennzeichnet, dass** der Käfig (64), der Deckel (66) und das Planetenrad (16) aus Kunststoff und die Planetenradachse (34) aus Stahl bestehen.

15. Verfahren zum Herstellen einer Planetenträgeranordnung nach Anspruch 14, umfassend folgende Schritte
- Bereitstellen des Käfigs (64) durch Umspritzen der Planetenradachse (34),
- Aufstecken des Planetenrads (16) auf die Planentenradachse (34), und
- Befestigen des Deckels (66) am Käfig (64) oder an der Planetenradachse (34).

16. Planetenträgeranordnung eines Planetengetriebes, insbesondere eines Planetengetriebes eines Seitentürantriebes, umfassend
- einen vorzugsweise zweiteiligen Planetenträger (62) mit
- einem flanschartigen Käfig (64), der sich entlang einer Drehachse (APT) erstreckt, und
- einem mit dem Käfig (64) unter Ausbildung einer Aussparung (24) verbundenen Deckel (66),
- mindestens ein Planetenrad (16), welches mittels einer Planetenradachse (34) beabstandet zu der Drehachse (APT) um eine Planetenraddrehachse (APR) in der Aussparung (24) drehbar gelagert gehalten ist,
**dadurch gekennzeichnet, dass** der Käfig (64), der Deckel (66) und das Planetenrad (16) und die Planetenradachse (34) aus Kunststoff bestehen und die Planetenradachse (34) vom Käfig (64) oder vom Deckel (66) gebildet wird.

17. Verfahren zum Herstellen einer Planetenträgeranordnung nach Anspruch 16, umfassend folgende Schritte
- Bereitstellen des Käfigs (64), der die Planetenradachse (34) bildet,
- Aufstecken des Planetenrads (16) auf die Planentenradachse (34), und
- Befestigen des Deckels (66) am Käfig (64) oder an der Planetenradachse (34).

18. Planetenträgeranordnung eines Planetengetriebes, insbesondere eines Planetengetriebes eines Seitentürantriebes, umfassend
- einen vorzugsweise zweiteiligen Planetenträger (12) mit
- einem flanschartigen Käfig (64) der sich entlang einer Drehachse (APT) erstreckt, und
- einem mit dem Käfig (64) unter Ausbildung einer Aussparung (24) verbundenen Deckel (66),
- mindestens ein Planetenrad (16), welches mittels einer Planetenradachse (34) beabstandet zu der Drehachse (APT) um eine Planetenraddrehachse (APR) in der Aussparung (24) drehbar gelagert gehalten ist,
**dadurch gekennzeichnet, dass** der Käfig (64), der Deckel (66), das Planetenrad (16) und die Planetenradachse (34) aus Kunststoff bestehen und die Planetenradachse (34) einen vom Käfig (64) gebildeten ersten Planetenrad-Achsenabschnitt (68) und einen vom Deckel (66) gebildeten zweiten Planetenrad-Achsenabschnitt (70) aufweist, die ineinander einbringbar sind.

19. Planetenträgeranordnung nach Anspruch 18,
**dadurch gekennzeichnet, dass** der Käfig (64) aus einem ersten Kunststoff und der Deckel (66) aus einem zweiten Kunststoff bestehen.

20. Verfahren zum Herstellen einer Planetenträgeranordnung nach einem der Ansprüche 18 oder 19, umfassend folgende Schritte
- Bereitstellen des Käfigs (64), der den ersten Planetenrad-Achsenabschnitt (68) bildet,
- Bereitstellen des Deckels (66), der den zweiten Planetenrad-Achsenabschnitt (70) bildet,
- Einbringen des ersten Planetenrad-Achsenabschnitts (68) und des zweiten Planetenrad-Achsenabschnitts (70) ineinander,
- Aufstecken der Planetenräder (16) auf den ersten Planetenrad-Achsenabschnitt (68) oder auf den zweiten Planetenrad-Achsenabschnitt (70), und
- Befestigen des Deckels (66) am Käfig (64) oder an den Planetenradachsen.

21. Verfahren nach einem der Ansprüche 15, 17, 19 oder 20, wobei der Deckel (66), der Käfig (64) und/oder die Planetenradachsen über Rastmittel (50) verfügen, mit welchen der Deckel (66) an den Planetenradachsen oder am Käfig (64) durch Verrasten befestigt wird.

22. Verfahren nach einem der Ansprüche 17, 19 oder 20, wobei der Deckel (66) an den Planetenradachsen oder am Käfig (64) durch Ultraschallverschweißen befestigt wird.
